# EUROPEAN PATENT SPECIFICATION

(11) **EP 2 374 903 B1**
(45) Date of publication and mention of the grant of the patent: **08.06.2016**
(21) Application number: 09831700.1
(22) Date of filing: 09.12.2009
(51) Int. Cl.: C13K 1/02, B01J 23/44, B01J 23/46, B01J 23/48

(54) **METHOD FOR PRODUCING A SUGAR-CONTAINING LIQUID IN WHICH THE PRIMARY INGREDIENT IS GLUCOSE**
VERFAHREN ZUR HERSTELLUNG EINER ZUCKERHALTIGEN FLÜSSIGKEIT MIT GLUCOSE ALS PRIMÄREM INHALTSSTOFF
PROCÉDÉ DE FABRICATION D'UN LIQUIDE CONTENANT DU SUCRE, DONT LE COMPOSANT PRINCIPAL EST LE GLUCOSE.

(30) Priority: 09.12.2008 JP 2008313710
(43) Date of publication of application: 12.10.2011
(73) Proprietor: National University Corporation Hokkaido University, Sapporo-shi Hokkaido 060-0808 (JP)
(72) Inventor: FUKUOKA, Atsushi, Sapporo-shi, Hokkaido 060-0808 (JP); KOMANOYA, Tasuku, Sapporo-shi, Hokkaido 060-0808 (JP)
(74) Representative: Godemeyer Blum Lenze Patentanwälte Partnerschaft mbB - werkpatent
(86) International application number: PCT/JP2009/006720
(87) International publication number: WO 2010/067593

(56) References cited:
- WO-A1-2007/100052
- JP-A- 2006 129 735
- US-A1- 2008 227 972
- ATSUSHI FUKUOKA: 'Shokubai ni yoru Cellulose Bunkai Hanno' CELLULOSE COMMUN. vol. 14, November 2007, pages 67 - 70, XP008155263
- CAO N. ET AL.: 'Cellulose hydrolysis using zinc chloride as a solvent and catalyst.' APPL. BIOCHEM. BIOTECHNOL. vol. 45/46, 1994, pages 521 - 530, XP035176504
- LUO C. ET AL.: 'Cellulose conversion into polyols catalyzed by reversibly formed acids and supported ruthenium clusters in hot water.' ANGEW. CHEM. INT. ED. vol. 46, 2007, pages 7636 - 7639, XP055003509
- FUKUOKA A. ET AL.: 'Catalytic conversion of cellulose into sugar alcohols.' ANGEW. CHEM. INT. ED. vol. 45, 2006, pages 5161 - 5163, XP003016856
- TASUKU KOMANOYA ET AL.: 'Tanji Kinzoku Shokubai ni yoru Cellulose no Kasui Bunkai Hanno' DAI 104 KAI SHOKUBAI TORONKAI TORONKAI A YOKOSHU 27 September 2009, page 132, XP008169166
- ATSUSHI FUKUOKA ET AL.: 'Biomass o Bunkai suru Kotai Shokubai - Teitanso Shakai o Mezasu Gijutsu Kaihatsu' CHEMISTRY vol. 64, pages 70 - 71, XP008169389
- DENG W. ET AL.: 'Conversion of cellulose into sorbitol over carbon nanotube-supported ruthenium catalyst.' CATAL. LETT. vol. 133, no. 1/2, September 2009, pages 167 - 174, XP019746849
- HIROKAZU KOBAYASHI ET AL.: 'Shokubai ni yoru Biomass Shigen no Yuko Riyo' EXPECTED MATERIALS FOR THE FUTURE vol. 10, no. 1, November 2001, pages 39 - 43, XP008169131

## Description

### Technical Field

The present invention relates to a method of producing a saccharide-containing solution comprised chiefly of glucose employing cellulose as a raw material.

### [Background Art]

Methods of hydrolyzing (saccharifying) cellulose include the sulfuric acid method, the enzymatic method, and the pressurized hot water method. The sulfuric acid method presents danger in terms of device corrosion and handling, and necessitates the processing of waste acid. The enzymatic method requires separation of the enzyme and product, and presents a problem in the form of low glucose production. In the pressurized hot water method, cellulose is hydrolyzed by means of acid points that are produced in water. Although the processing following the reaction is easy, there is room for improvement in the glucose yield. Further, when soluble catalysts and/or reaction promoters are employed, they must be separated. For example, Japanese Unexamined Patent Publication (KOKAI) Heisei No. 10-327900 (Patent Reference 1) describes cellulose hydrolysis by means of pressurized hot water, but the main product is a water-soluble oligosaccharide and not glucose. Japanese Unexamined Patent Publication (KOKAI) No. 2002-85100 (Patent Reference 2) describes that the degradation of cellulose is promoted by addition of lanthanoid ions in the pressurized hot water, but the separation of water-soluble lanthanoid ions following the reaction is not an easy task. Similarly, Japanese Unexamined Patent Publication (KOKAI) No. 2007-20555 (Patent Reference 3) describes that the addition of an oxidizing agent such as copper chloride to the pressurized hot water reaction system increases the glucose yield, but in this case, as well, it is not easy to separate the water-soluble oxidizing agent from the solution following the reaction.

Recently, the groups of Hara at the Tokyo Institute of Technology (J. Am. Chem. Soc., 130, 12787 (2008) (Nonpatent Reference 1)) and Onda at Kochi University (Shokubai, 50, 471 (2008) (Nonpatent Reference 2); Green Chem., 10, 1033 (2008) (Nonpatent Reference 3)) have independently reported obtaining glucose by hydrolysis in water at 100 to 150°C employing an acid catalyst in the form of a carbon material such as activated carbon that has been surface treated by sulfonation. For example, the report of Onda et al., which is considered to afford a higher degree of reproducibility, describes a glucose yield of about 40 percent (based on carbon) by a 24-hour reaction at 150°C employing a catalyst in the form of sulfonated activated carbon.

Previously, the present inventors reported employing a supported metal catalyst to conduct a 24-hour reaction at 190°C at a hydrogen pressure of 5 MPa in water to degrade cellulose and produce saccharide alcohols comprising chiefly of sorbitol (WO2007/100052 (Patent Reference 4)).

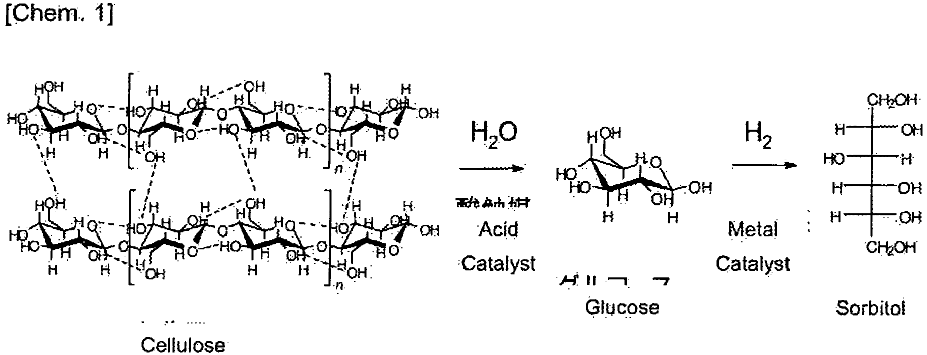

Patent Reference 1: Japanese Unexamined Patent Publication (KOKAI) Heisei No. 10-327900
Patent Reference 2: Japanese Unexamined Patent Publication (KOKAI) No. 2002-85100
Patent Reference 3: Japanese Unexamined Patent Publication (KOKAI) No. 2007-20555
Patent Reference 4: WO2007/100052
Nonpatent Reference 1: J. Am. Chem. Soc., 130, 12787 (2008)
Nonpatent Reference 2: Shokubai, 50, 471 (2008)
Nonpatent Reference 3: Green Chem., 10, 1033 (2008)

The entire contents of Patent References 1 to 4 and Nonpatent References 1 to 3 are hereby incorporated by reference herein.

### [Summary of Invention]

### [Problem to Be Solved by the Invention]

The prior art described in Patent References 1 to 3 presents the following problems:
(1) A low glucose yield in cellulose hydrolysis by means of pressurized hot water; and
(2) Difficulty in separating the catalyst (reaction accelerator) from the product.

By contrast, the method described in Patent Reference 4 affords ease of separation of the product from the catalyst (reaction accelerator). However, the reaction in this method is comprised of the two stages of producing glucose by hydrolyzing cellulose and producing sorbitol by reducing glucose, with the reduction in the latter stage being rapid. Thus, it is impossible to obtain glucose at high yield.

The solid catalysts with sulfonated surfaces that are described in Nonpatent References 1 to 3 have attracted attention as substitutes for sulfuric acid, but catalyst deterioration due to dissolution of the sulfo group (-SO₃H) is often observed. Further, in the above research, since sulfuric acid is employed in the catalyst preparation stage, it is necessary to process the sulfuric acid.

Accordingly, the object of the present invention is to provide a method of producing glucose, or a saccharide-containing solution having a high glucose content, from cellulose at a high glucose yield using a catalyst that is readily separated from the product.

### [Means of Solving the Problem]

The present inventors examined in detail the conditions of the reaction described in Patent Reference 4. As a result, they discovered that by hydrolyzing cellulose using a supported metal catalyst, it was possible to prepare a saccharide-containing solution comprised chiefly of glucose. The present invention was devised on that basis.

The present invention is as follows:
[1] A method of producing a saccharide-containing solution comprised chiefly of glucose, comprising:
   heating cellulose to a temperature at which a pressurized state is achieved in the presence of water and a catalyst in which a transition metal from groups 8 to 11 is supported on a solid support to hydrolyze the cellulose and obtain glucose.
[2] The production method according to [1], wherein the heating temperature falls within a range of 110 to 380°C.
[3] The production method according to [1], wherein the hydrolysis atmosphere is air, oxygen, nitrogen, hydrogen, or a mixture thereof.
[4] The production method according to [1], wherein the heating is stopped when the conversion rate of cellulose by hydrolysis is between 10 to 100 percent and the selectivity of glucose is between 30 to 80 percent.
[5] The production method according to [4], wherein after stopping the heating, the reaction solution is cooled.
[6] The production method according to [5], wherein cooling of the reaction solution is conducted under conditions that maintain a glucose selectivity of 30 to 80 percent.
[7] The production method according to [5], wherein cooling of the reaction solution is conducted at a rate of 1 to 200°C/minute to a temperature of 200°C.
[8] The production method according to any one of [1] to [7], wherein the heating or heating and cooling are conducted so that the reaction solution remains for fewer than 15 minutes at a temperature of 200°C or higher.
[9] The production method according to any one of [1] to [8], wherein the transition metal is at least one member selected from the group consisting of platinum, ruthenium, rhodium, palladium, iridium, nickel, cobalt, iron, copper, silver, and gold.
[10] The production method according to any one of [1] to [8], wherein the transition metal is at least.one member selected from the group consisting of ruthenium, platinum, palladium, and rhodium.
[11] The production method according to any one of [1] to [10], wherein at least a portion of the solid support is at least one member selected from the group consisting of alumina, silica-alumina, and zeolite.
[12] The production method according to any one of [1] to [11], wherein the cellulose is crystalline, or is cellulose of reduced crystallinity.
[13] The production method according to any one of [1] to [12], wherein following hydrolysis, the reaction mixture is subjected to solid-liquid separation to separate a saccharide-containing solution comprised chiefly of glucose and a solid comprised of at least a catalyst and unreacted cellulose.

### [Effect of the Invention]

The present invention provides a method of producing glucose or a saccharide-containing solution with a high glucose content from cellulose at a high glucose yield using a catalyst that is readily separated from the product

Glucose is a precursor of various useful compounds, including bioethanol and lactic acid, which is a starting material of biodegradable plastic. Thus, the present invention, which makes it possible to produce glucose or a saccharide-containing solution with a high glucose content from cellulose is useful in the chemical industry.

### [Brief Description of Drawings]

Fig. 1. shows the results of measurement by X-ray powder diffraction of the degree of crystallinity of the cellulose employed as starting material and cellulose following four days of processing in a ball mill.
Fig. 2 is a photograph (left) of the high-pressure reactor (from the website of OM Lab-Tech Co., Ltd.) employed in the catalytic reaction and a descriptive drawing (right).
Fig. 3 shows the results of change over time in the reaction temperature.
Fig. 4 shows the change in temperature within the microreactor under conditions (i) to (v) in Test Result (8).
Fig. 5 shows the composition of the products obtained under conditions (i) to (v) in Test Result (8).

### [Modes of Carrying Out the Intention]

The present invention relates to a method of producing a saccharide-containing solution comprised chiefly of glucose comprising heating cellulose to a temperature at which a pressurized state is achieved in the presence of water and a catalyst in which a transition metal from groups 8 to 11 is supported on a solid support to hydrolyze the cellulose and obtain glucose.

The production method of the present invention hydrolyzes cellulose and yields glucose. The reaction is as indicated by the following scheme:

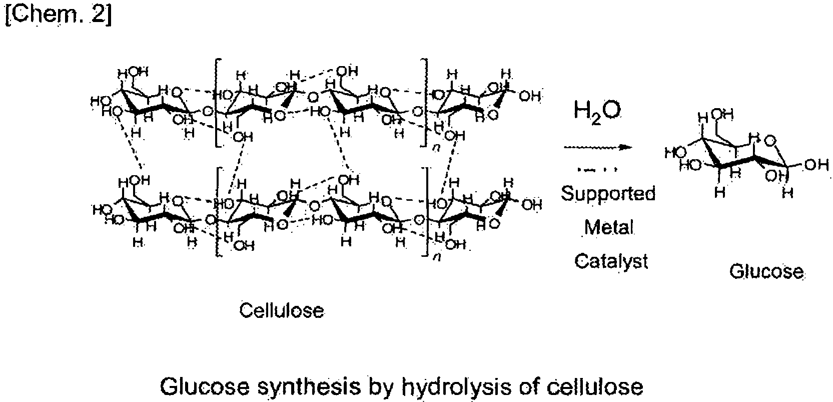

However, when cellulose is hydrolyzed, tetramer and higher cellulose hydrolysis products, cellotriose, cellobiose, and the like are produced in addition to glucose. Further, the glucose that is produced further reacts, producing galactose, mannose, fructose, levoglucosan, 5-hydroxymethylfurfural (5-HMF), furfural, and the like. The saccharide-containing solution obtained by the present invention contains hydrolysis products of cellulose, including glucose, and by-products of the glucose that is produced, but the chief component is glucose. The term "chief component" means the component present in the greatest quantity by mass among the solid components (of the reaction product).

The present inventors, by hydrolyzing cellulose in the condition stated above under prescribed conditions, achieved a rate of cellulose conversion by hydrolysis within a range of 40 to 100 percent, desirably within a range of 50 to 100 percent, preferably within a range of 60 to 100 percent, and optimally, within a range of 70 to 100 percent; and achieved a glucose selectivity falling within a range of 20 to 80 percent, desirably within a range of 25 to 80 percent, preferable within a range of 30 to 80 percent, and optimally, within a range of 40 to 100 percent.

The hydrolysis of cellulose is conducted by heating cellulose to a temperature that produces a pressurized state in the presence of a catalyst and water. The temperature of heating that produces a pressurized state suitably falls within a range of 110 to 380°C. From the perspective of rapidly hydrolyzing cellulose, a relatively high temperature such as 170 to 320°C is desirable, 200 to 300°C is preferable, 210 to 260°C is of greater preference, and a temperature falling within a range of 220 to 250°C is optimal. The hydrolysis of cellulose by the production method of the present invention is normally conducted in a sealed container such as an autoclave. Thus, even when the reaction begins at ordinary pressure, once the reaction system has been heated to the above-stated temperature, a pressurized state is produced.

The quantity of water that is present for hydrolysis is at least a quantity that will hydrolyze the entire quantity of cellulose. Preferably, taking into account the fluidity and stirring properties of the reaction mixture, water can be employed in a mass ratio ranging from 5 to 500-fold the mass of the cellulose, for example.

The quantity of catalyst employed can be suitably determined taking into account the activity of the catalyst and the reaction conditions (such as temperature and time). For example, the catalyst is suitably employed in a mass ratio ranging from 0,05 to 5-fold the mass of the cellulose.

The atmosphere of the hydrolysis can be air. Air is industrially desirable. However, other gases such as oxygen, nitrogen, hydrogen, and mixtures thereof (other than air) can be employed instead of air.

The heating in the above hydrolysis is desirably halted while the rate of conversion of cellulose by hydrolysis is between 10 and 100 percent and the selectivity of glucose is between 30 and 80 percent to increase the glucose yield. The period where the rate of conversion of cellulose by hydrolysis is between 10 and 100 percent and the selectivity of glucose is between 30 and 80 percent varies with the heating temperature, type and quantity of catalyst employed, quantity of water (proportion relative to cellulose), type of cellulose, stirring method and conditions, and the like. Thus, this period can be experimentally determined by determining these conditions. Under ordinary conditions, for example, this period will range from 5 to 60 minutes, and will desirably range from 5 to 30 minutes from the start of heating to induce the hydrolysis reaction. However, the intent is not to limit this period to within this range. So long as some degree of selectivity of glucose is being maintained, a high rate of conversion of cellulose by hydrolysis is suitable from the perspective of productivity. For example, 20 to 100 percent is desirable and 30 to 100 percent is preferred.

Once heating has been halted, it is desirable to cool the reaction solution from the perspectives of inhibiting the conversion of glucose into other saccharides and increasing the glucose yield. Cooling the reaction solution under conditions that maintain a glucose selectivity of between 30 and 80 percent is desirable from the perspective of increasing the glucose yield. Cooling the reaction solution as rapidly as possible to a temperature where the conversion of glucose to other saccharides essentially does not occur is desirable from the perspective of increasing the glucose yield. For example, cooling can be conducted at a rate ranging from 1 to 200°C/minute, desirably at a rate ranging from 10 to 100°C/minute. The temperature at which the conversion of glucose to other saccharides, such as 5-HMF essentially does not occur, is, for example, 200°C or lower. Accordingly, particularly when the reaction temperature exceeds 200°C, the reaction temperature is desirably rapidly cooled to 200°C at a rate ranging from 10 to 200°C/minute, preferably at a rate ranging from 20 to 200°C/minute. The cooling rate, once a temperature of 200°C or lower has been reached, is not specifically limited. For example, cooling can be conducted at a rate falling within the above range to 150°C or 110°C.

At a temperature range of 200°C and above, the glucose that is produced by hydrolysis of cellulose tends to be converted to 5-HMF and the like. From the perspective of inhibiting conversion to 5-HMF and the like and enhancing glucose selectivity, during the period of heating or the combined period of heating and cooling, the period during which the temperature falls within a range of 200°C or higher is desirably kept to 15 minutes or less, preferably 10 minutes or less. As set forth above, from the perspective of rapidly hydrolyzing cellulose, a relatively high reaction temperature is desirable (for example, 170 to 320°C is desirable, 200 to 300°C is preferable, 210 to 260°C is of greater preference, and a range of 220 to 250°C is of still greater preference). Thus, in the present invention, it is suitable to employ a relatively high reaction temperature and to keep the retention time at that temperature relatively short.

The hydrolysis reaction can be conducted in the form of a batch reaction, continuous reaction, or the like. The reaction is desirably conducted while stirring the reaction mixture. In both batch and continuous type reactions, from the perspective of increasing the glucose selectivity, it is desirable to set or select operating conditions so that a relatively high reaction temperature is employed and the retention time at that temperature is kept relatively short.

In the present invention, a saccharide-containing solution comprised chiefly of glucose can be prepared with high glucose selectivity.

The catalyst used in the production method of the present invention is a catalyst in which a transition metal from groups 8 to 11 is supported on a solid support.

### The solid support

At least a portion of the solid support employed in the catalyst is suitably comprised of a porous material; it is also suitable for a transition metal to be supported on the surface of the porous material. Accordingly, the solid support employed in the catalyst is suitably comprised of a porous material at least some portion of the surface of which supports a transition metal, and the solid support may be comprised of a porous material as a whole or may be comprised of a nonporous material the surface of which is coated with a porous material. The support may also be comprised of another porous material.

At least a portion of the solid support employed in the catalyst can be comprised of an inorganic oxide, for example. The inorganic oxide is desirably the above-described porous material. Further, at least a portion of the solid support employed in the catalyst is desirably in the form of a solid support exhibiting acidity, with the solid support exhibiting acidity desirably being the above-described porous material.

Specific examples of the solid support are: silica, alumina, silica-alumina, zeolite, titania, zirconia, and activated carbon.

Among the silicas, examples of amorphous silicas are: Wako Pure Chemical Industries, Ltd.: Wakogels (C-100, C-100E, C-200, C-200E, C-300, C-300E, C-300HG, C-400HG, C-500HG, 50C18, 100C18, DX, FC-40, FC-40FM, G, LP-20, LP-40, LP-60,Q-12, Q-22, Q-23, Q-50. Q-63, and S-1); Wakosils (C-200, C-300, 25S1L, 25C18, 40SIL, and 40C18); Kanto Chemical Co., Inc.: silica gels (60 and 60N); Merck, Inc.: silica gels (40, 60, and 100); Sigma-Aldrich Japan K. K.: silica gels (03, 12, 15, 22, 40, 41, 62, 922, 923, high-purity grade, 70-230 mesh 60 Angstrom, 70-270 mesh 60 Angstrom, 130-270 mesh 60 Angstrom, and 200-400 mesh 60 Angstrom) and silicon dioxide (particle size 0.5-10 micrometers); Fuji Silysia Chemical, Ltd.: CARIACT (Q, G, and P); Grace Davison Co.: Davisil (633, 634, 635, 636, 643, 644, 645, 646, and 710); Degussa (Nippon Aerosil Co., Ltd.)): Aerosil (90,130,150, 200, 300, and 380); NIKKI CHEMICAL CO.,LTD.: silica catalysts (N601, N601A, N601T, N601 R3, N601A3, N601T3, N602, N602A, N602T, N608R, N608A, and N608T); Catalysis Society of Japan: silica reference catalysts(JRC-SIO-1, JRC-SIO-5, JRC-SIO-6, JRC-SIO-7, and JRC-SIO-9A); and Riedel-de-Haën Co.: Cabosil M-5.

Examples of mesoporous silicas are those having pore diameters of 2 to 50 nm and surface areas of 500 to 1,500 m²g⁻¹, such as FSM-16 (S. Inagaki et al., J. Chem. Soc., Chem. Commun., 680 (1993); MCM-41 (C. T. Kresge et al., Nature, 359, 710 (1992); J. S. Beck, et al. J. Am. Chem. Soc., 114, 10834 (1992)): SBA-15 (D. Zhao, et al., Science, 279, 548 (1998); Taiyo Kagaku Co., Ltd.: NPM (nanoporous material, pore diameter 1-10nm); and Sigma-Aldrich Japan K.K.: Silica (mesostructured, hexagonal framework, MCM-41 type).

Examples of alumina in the form of *gamma*-alumina are: Wako Pure Chemical Industries, Ltd.: activated alumina; Kanto Chemical Co., Inc.: aluminum oxide (*alpha-t*ype, NanoTek, activated); Merck Inc.: Alumina (90, 90 (activated, acidic, activity I), 90 (activated, basic, activity I), and 90(activated, neutral, activity 1)); Sigma-Aldrich Japan K.K.: aluminum oxide (99.99 percent,-100 mesh 99.9 percent, powder <10 micrometers, nanopowder, nanopowder whiskers, -100 mesh 99 percent, pellets 3 mm, activated acidic Brockmann 1, activated weakly acidic Brockmann I, activated basic Brockmann I, activated neutral Brockmann I, fused); Nishio K.K.: *gamma*-alumina A-11; NIKKI CHEMICAL CO., LTD.: alumina catalysts (N611N, N611 N3, N612N, and N613N); and the Catalysis Society of Japan: alumina reference catalysts (JRC-ALO-1, JRC-ALO-2, JRC-ALO-3, JRC-ALO-5, JRC-ALO-1A, JRC-ALO-5A, JRC-ALO-6, JRC-ALO-7, and JRC-ALO-8).

Examples of titania comprise the rutile, anatase, and amorphous forms, specifically: Wako Pure Chemical Industries, Ltd.: titanium (IV) oxide (amorphous, anatase, and rutile forms, 80 nm); Kanto Chemicat Co., Inc.: titanium (IV) oxide (rutile and anatase forms, 3N, NanoTek); Sigma-Aldrich Japan K.K.: Titanium(IV) oxide (99.999 percent. 99.99 percent, mesoporous 32 Angstrom pore 99.95 percent, powder <5 microns 99.9+ percent, powder 99.9+ percent, -325 mesh 99+ percent; Japan Aerosil Co., Ltd.: Aeroxide TiO₂ (NKT90, P25, PF2, and T805); Sakai Chemical Industry Co., Ltd.: titanium oxides (SR-1, R-42, R-GL, -R-GX, R-GX-2. R-45M, R-650, R-32, R-5N, R-5N-2, R-61N, R-62N, R-7E, R-3L, R-3L-SN, R-11P, R-21, R-25, R-310, D-918, A-110, A-150, ST-G, A-190, SA-1, and SA-1 L); Ishihara Sangyo Kaisha, Ltd.: ultrafine particulate titanium oxide (TTO-51(A), TTO-51(C), TTO-55(A), TTO-55(B), TTO-55(C), TTO-55(D), TTO-S-1, TTO-S-2, TTO-S-3, MPT-136, TTO-V-3, TTO-V-4, TTO-F-2, and TTO-F-6), neutral titaniasol TSK-5, catalyst supporting titanium oxides (MC-50, MC-90, MC-150), and photocatalyic titanium oxides (ST-01, ST-21, ST-31, ST-41, and ST-30L); and the Catalysis Society of Japan: titania reference catalysts (JRC-TIO-1, JRC-TIO-2, JRC-TIO-4, JRC-TIO-5, JRC-TIO-6, JRC-TIO-7, JRC-TIO-8, JRC-TIO-9, JRC-TIO-10, JRC-TIO-11, JRC-TIO-12, and JRC-TIO-13).

Examples of silica-alumina are Sigma-Aldrich Japan K.K.: silica-alumina catalyst support grade 135; NIKKI CHEMICAL CO.,LTD.: silica-alumina (N631L, N631HN, N632L, N632HN, N633L, and N633HN), and the Catalysis Society of Japan: silíca-alumina reference catalysts (JRC-SAH-1 and JRC-SAL-2).

Examples of zeolite are:
*beta*-type (structural code BEA, hereinafter same): Catalysis Society of Japan: zeolite (*beta*) reference catalysts JRC-Z-B25(1), JRC-Z-HB25(1), JRC-HB-150(1); Zeolyst Co.: CP814N*, CP814E*, CP814C*, CP814Q*, CP811E-150, CP819C-300; Tosoh Corporation: 930NHA, 940NHA, and 940HOA;
Y-type (FAU): Sigma-Aldrich Japan K.K.: molecular sieve catalyst support, sodium Y zeolite, powder; molecular sieves catalyst support, ammonium Y zeotite, powder; Catalysis Society of Japan: zeolite (Y-type) reference catalysts JRC-Z-Y4.8, JRC-Z-Y5.6, JRC-Z-HY4.8(2), JRC-Z-Y5.5, JRC-Z-Y5.3, JRC-Z-HY5.5, and JRC-Z-HY5.3; UOP LLC: Y-52(NaY), Y-64(NH₄Y), Y-74(HY), Y-84(NH4Y), and LZ-15(HY); Zeolyst Co.: CBV100. CBV300, CBV400, GBV 600, CBV 712, CBV 720, CBV 740, CBV760, CBV780, and CBV 901); Tosoh Corporation: 320NAA, 320HOA, 331HSA, 341NHA, 350HUA, 360HUA, 385HUA, and 390HUA; and Catalysts & Chemicals Ind. Co., Ltd.: ZCP-50S, ZCP-50, ZCP-150, ZCP-300, ZCP-700, ZCP-1000, ZCP-2000, ZCE-50S, ZCE-50, ZCE-150 to 2000, ZCB-50S, and ZCB-2000. In the present application, when referring to Y-type zeolites, the dealuminated Y-type zeolites is referred to as "USY" and those that have not been so processed simply as "Y". Accordingly, those in which the cation is a proton is referred to as "HUSY" and "HY," respectively.
ZSM-5 type (MFI): Catalysis Society of Japan: zeolite (ZSM-5) reference catalysts: JRC-Z5-25H, JRC-Z5-70H, JRC-Z5-1000H, JRC-Z5-70NA, JRC-Z5-1000NA, JRC-Z5-90NA(1), and JRC-Z5-90H(1); and Zeolyst Co.: CBV2314, CBV3020E, CBV3024E, CBV5524G, CBV8014, and CBV28014.
Mordenite zeolite (MOR): Catalysis Society of Japan: zeolite (mordenite) reference catalysts JRC-Z-M15(1), JRC-Z-M20(1), JRC-Z-HM20(5), JRC-Z-HM90(1); Zeolyst Co.: CBV10A, CBV21A, and CBV90A; and Tosoh Corporation: 642NAA, 640HOA, and 690HOA.

Examples of activated carbon are:
Wako Pure Chemical Industries, Ltd.: activated carbon (for chromatography, comminuted form 0.2 to 1 mm, comminuted form 2 to 5 mm, granular form, powder form, powder acid-washed, powder alkaline, powder neutral, rod-shaped);
Kanto Chemical Co., Inc.: activated carbon (particulate and powder);
Sigma-Aldrich Japan K.K.: activated carbon granules 4 to 14 mesh;
Norit Japan Co., Ltd.: PK, PKDA 10x30 MESH (MRK), ELORIT, AZO, DARCO, HYDRODARCO 3000/4000, DARCO LI, PETRODARCO, DARCO MRX, GAC, GAC PLUS, DARCO VAPURE, GCN, C GRAN, ROW/ROY, RO, ROX, RB/W, R, R.EXTRA, SORBONORIT, GF 40/45, CNR, ROZ, RBAA, RBHG, RZN, RGM, SX, SA, D 10, VETERINAIR, PN, ZN, SA-SW, W, GL, SAM, HB PLUS, A/B/C EUR/USP, CA, CN, CG, GB, CAP/CGP SUPER, S-51, S-51 A, S-51 HF, S-51 FF, DARCO GFP, HDB/HDC/HDR/HDW, GRO SAFE, DARCO INSUL, FM-1, DARCO TRS, DARCO FGD/FGL/Hg/Hg-LH, and PAC 20/200;
Japan EnviroChemicals, Ltd.: Shirasagi (A, C, DO-2, DO-5, DO-11, FAC-10, M, P, PHC, Element DC), Aldenite, Carboraffin, Carboraffin DC, honeycomb carbo Shirasagi, Morshibon, strong Shirasagi, purified, Shirasagi, special order Shirasagi, X-7000/X7100 X7000-3/X-7100-3, LPM006, LPM007, and particulate Shirasagi (APRC, C2c, C2x, DC, G2c, G2x, GAAx, GH2x,. GHxUG, GM2x, GOC, GOHx, GOX, GS1x, GS2x, GS3x, GTx, GTsx, KL, LGK-100, LGK-400, LGK-700, LH2c, MAC, MAC-W, NCC, S2x, SRCX, TAC, WH2c/W2c, WH2x, WH5c/W5c, WHA, X2M (Morshibon 5A), XRC, X7000H/X7100H, X7000H-3X7100-3, LGK-700, and DX7-3);
Kuraray Chemical Co., Ltd: gas phase-use particulate activated carbons GG/GS/GA; gas phase-use activated carbons GW/GL/GLC/KW/GWC; and powder activated carbons PW/PK/PDX;
Calgon Mitsubishi Chemical Carbon: Diahope (006, 006S, 007, 008, 008B, 008S, 106, 6D, 6MD, 6MW, 6W, S60, C, DX, MM, MZ, PX, S60S, S61, S70, S80, S80A, S80J, S80S, S81, ZGA4, ZGB4, ZGN4, ZGR3, ZGR4, ZS, ZX-4, and ZX-7), Diasorp (F, G4-8, W 8-32, W 10-30, XCA-C, XCA-AS, and ZGR4-C), and Calgon (AG 40, AGR, APA, AP3-60, AP4-60, APC, ASC, BPL, BPL 4x10, CAL, CENTAUR 4x6, CENTAUR 8x30, CENTAUR 12x40, CENTAUR HSV, CPG 8x30, CPG 12x40, F-AG 5, Filtrasorb 300, Filtrasorb 400, GRC 20, GRC 20 12x40, GRC 22, HGR, HGR-LH, HGR-P, IVP 4x6, OL 20x50, OLC 20x50, PCB, PCB 4x10, RVG, SGL, STL 820, URC, WS 460, WS 465, WS 480, WS490, and WSC 470);
Ajinomoto Fine-Techno Co., Inc.: BA, BA-H, CL-H, CL-K, F-17, GS-A, GS-B, HF, HG, HG-S, HN, HP, SD. Y-180C, Y-4, Y-4S, Y-10S, Y-10SF, YF-4, YN-4, YP, and ZN;
Cataler Corporation: A series, BC-9, BFG series, CT series, DSW series, FM-150, FW, FY series, GA, PG series, and WA series; and
Cabot Corporation: BLACK PEARLS series, ELFTEX series, VULCAN series, MOGUL series, MONARCH series, EMPORER series, REGAL series, UNITED series, SPHERON series, STERLING series, Show Black series. Activated carbon with a surface area of 800 to 3,000 m²g⁻¹ is desirable.

Neither the shape nor the form of the solid support is specifically limited. However, for example, powder form, particulate form, granular form, pellet form, or honeycomb form; an extruded shape; a ring form or columnar form; an extruded ribbed shape; or a ribbed ring form can be used. A support that is in the form of a powder, particle, grain, or pellet, for example, can be comprised solely of the above-described porous material, oxide, or material exhibiting acidity. By contrast, a support of honeycomb structure can be comprised of a nonporous material, such as a support comprised of cordierite or the surface of which is coated with a porous material, oxide, or material exhibiting acidity. This support can also be comprised of another porous material.

The transition metal is at least one member selected from the group consisting of platinum, ruthenium, rhodium, palladium, iridium, nickel, cobalt, iron, copper, silver, and gold. These transition metals may be employed singly or in combinations of two or more. From the perspective of high catalytic activity, the transition metal is desirably selected from among the platinum group of metals consisting of platinum, ruthenium, rhodium, palladium, and iridium. From the perspective of high cellulose conversion and glucose selectivity, the transition metal is desirably selected from among ruthenium, platinum, palladium and rhodium.

The transition metal is suitably supported on the surface of the solid support with a dispersion of 0.01 to 0.95, desirably 0.1 to 0.9, and preferably, 0.3 to 0.8: When the dispersion is too lower, the reaction rate decreases. The dispersion of the transition metal can be adjusted by the amount of transition metal compound employed as the starting material, the temperature conditions (rate of temperature rise and maximum temperature) of oxygen calcination during catalyst preparation, and the temperature conditions during hydrogen reduction (rate of temperature rise and maximum temperature).

The amount of transition metal that is supported on the solid support can be suitably determined in consideration of the type and the dispersion of the transition metal, and is, for example, suitably 0.01 to 50 mass%, desirably 0.01 to 30 mass%, and more preferably, 0.01 to 10 mass%, of the catalyst.

The catalyst can be produced by referencing conventional methods for preparing metal-supporting solid catalysts. For example, preparation is possible in the following manner by the impregnation method. The support is vacuum dried for one hour at 150°C, Next, water is added to prepare a dispersion liquid. To this is added an aqueous solution containing a prescribed quantity of a metal salt and the mixture is stirred for 15 hours. Subsequently, the water is evaporated off under reduced pressure to obtain a solid, which is calcined for 2 hours at 400°C under an oxygen gas flow (When activated carbon is used the calcination is excluded), The product is then reduced for 2 hours at 400°C under a hydrogen gas flow to obtain a catalyst in solid form (see the flowchart below).

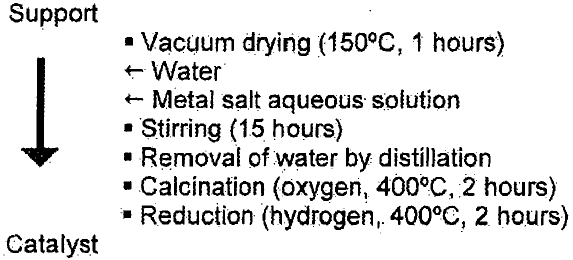

The catalyst employed in the present invention can be in the form of a single metal supported on a single support, or can be in the form of multiple metals supported on a single support. Further, two or more single metals supported on single supports or multiple metals supported on single supports can be compounded, such as by mixing, for use. The compounding of two or more types for use sometimes enhances the cellulose conversion rate and glucose selectivity. As a result, a high glucose yield can sometimes be achieved. The combination of metals and supports when compounding two or more types for use can be suitably selected taking into account the type of cellulose employed as starting material, the hydrolysis conditions, the types of other catalysts (metal and support) used in combination, and the like. The same applies when employing a catalyst comprised of multiple metals supported on a single support.

The cellulose serving as the raw material is not specifically limited; commercially available cellulose in powder form can be employed as is. The cellulose is of plant form, and may be, for example, water-insoluble cellulose obtained by bleaching a defatted wood powder with a chlorine treatment to obtain a chemical pulp (holocellulose), which is then subjected to an alkali treatment to remove the hemicellulose.

Generally, in cellulose, two or more cellulose units are bonded together by hydrogen bonds and exhibit crystallinity. In the present invention, cellulose exhibiting such crystallinity can be employed as the starting material, or such crystalline cellulose can be treated to reduce the crystallinity and the resulting cellulose of reduced crystallinity can be employed. The cellulose of reduced crystallinity can be cellulose the crystallinity of which has been partially reduced, or cellulose in which the crystallinity has been completely, or nearly completely, eliminated. The type of processing used to reduce crystallinity is not specifically limited, but a crystallinity-reducing process capable of cleaving the above hydrogen bonds and at least partially producing single-chain cellulose is desirable. The use of a starting material in the form of cellulose at least partially comprising single-chain cellulose greatly enhances the efficiency of hydrolysis.

The process used to reduce the crystallinity of the starting material cellulose can be a method of obtaining single-chain cellulose by physically cleaving the hydrogen bond of cellulose such as a ball mill processing (see H. Zhao, J. H. Kwak, J. A. Franz, J. M. White, J. E. Holladay, Energy & Fuels, 20, 807 (2006), or a method of obtaining single-chain cellulose by chemically cleaving the hydrogen bond of cellulose such as a phosphoric acid processing (see Y. -H. P. Zhang, J. Cui, L. R. Lynd, L. Kuang, Biomacromolecules, 7, 644 (2006), for example. Even when the processing to reduce the crystallinity of cellulose does not completely eliminate the crystallinity of the cellulose, as described in Table 5 of Embodiment 1, the efficiency of hydrolysis is greatly enhanced by employing cellulose as the starting material, the crystallinity of which has been partially reduced comparing to that prior to such processing. From the perspective of improvement of hydrolysis efficiency, the crystallinity of the cellulose employed as the starting material is suitably in a range of, for example, 0 to 50 percent, desirably 5 to 30 percent. However, cellulose with crystallinity out of the above crystallinity range is, of course, able to be employed in the production method of the present invention.

A further example of a process for reducing the crystallinity of cellulose is processing with pressurized hot water (see Nobuyuki Hayashi, Shuji Fujita, Takero Irie, Tuyoshi Sakamoto, Masao Shibata, J. Jpn. Inst. Energy, 83, 805 (2004), and M. Sasaki, Z. Fang, Y. Fukushima, T. Adschiri, K. Arai, Ind. Eng. Chem. Res., 39, 2883 (2000).

Following the hydrolysis, the reaction mixture is cooled and subjected to solid-liquid separation, a saccharide-containing aqueous solution which contains glucose as the chief component is recovered as a liquid phase, and solids including at least the catalyst and unreacted cellulose are separated out as the solid phase. The method of solid-liquid separation is not specifically limited, and may be suitably determined based on the usual methods in consideration of the shape and form of the catalyst, the amount of unreacted cellulose present, and the like. For example, methods such as filtration, centrifugation, and precipitation can be employed. The solid containing the catalyst and unreacted cellulose can be employed in the next reaction as they are.

The catalyst does not specifically require activation for reuse. However, for example, the usual activation of metal-supported solid catalysts can be employed prior to reuse.

In the catalyst activation process, the catalyst can be washed with water and dried and the metal and residual organic compounds on the support can be removed by thermal degradation with heating for 1 to 5 hours at 200 to 500°C under a hydrogen gas flow while returning the surface of the supported metal to a reduced state for use.

### [Embodiments]

The present invention will be described in detail below through embodiments.

### [Reference Example 1]

### Preparation of catalysts

Catalyst supports in the form of amorphous silica (denoted as SiO₂ hereinafter: CARIACT Q-10 made by Fuji Silysia Chemical, Ltd.), mesoporous silica (FSM-16, prepared in-house (S. Inagaki, et al., J. Chem. Soc., Chem. Commun., 680 1993))), *gamma*-alumina (*gamma*-Al₂O₃, made by Nishio K. K. A-11, the Catalysis Society of Japan: reference catalysts JRC-ALO-2), titania (TiO₂, Merck, Inc.), zirconia (ZrO₂. Wako Pure Chemical Industries, Ltd.), silica-alumina (SiO₂-Al₂O₃, Sigma-Aldrich Japan K.K. grade 135), HY (Zeolyst Co., CBV400, Si/Al atomic ratio of 2.55, CBV600, Si/Al atomic ratio of 2.6), HUSY (Zeolyst Co., CBV720 (Si/Al ratio 15), 740 (Si/Al ratio 20), 760 (Si/Al ratio 30), 780 (Si/Al ratio 40)), HUSY (Catalysts & Chemicals Ind. Co., Ltd. ZCP-2000, Si/Al ratio 100), ZSM-5 (Zeolyst Co. CBV4024E), the Catalysis Society of Japan: reference catalysts JRC-Z5-90(H), H-*beta* (Catalysis Society of Japan, catalyst JRC-Z-B25(1)), HMOR (Catalysis Society preference catalyst JRC-Z-M15(1)), activated carbon (Takeda Pharmaceutical Co., Ltd. (now, Japan EnviroChemicals, Ltd.), LPM007) were employed. Hereinafter, to distinguish HUSY, the Si/Al atomic ratio will be shown in parentheses and a notation such as HUSY (40) will be employed. ZSM-5 was calcined in air at 550°C for 8 hours to obtain HZSM-5. The support was pretreated by heating under vacuum at 150°C for 1 hour and then used for catalyst preparation. Metal precursors were commercially available chloroplatinic acid (H₂PtCl₆·xH₂O), ruthenium chloride (RuCl₃·xH₂O), hexaammineruthenium chloride ([Ru(NH₃)₆]Cl₃), rhodium chloride (RhCl₃·xH₂O), palladium chloride (PdCl₂), iridium chloride (lrCl₃·xH₂O), and nickel chloride (NiCl₂·6H₂O). Since PdCl₂ was insoluble in water, a small amount of hydrochloric acid was added and vacuum distillation was conducted in an evaporator to obtain water-soluble H₂PdCl₄. The other metal salts were employed as is. lonexchange water was employed as the water.

The example of Pt/HUSY (40) will be described below as the method of preparing a catalyst. HUSY (40) powder (200 mg) was heated at 150 °C for 1 hour using a vacuum line and dried (degree of vacuum about 10⁻³ Torr = 0.13 Pa). The mixture was cooled to room temperature and water (20 mL) was added to disperse the powder. To this was added an aqueous solution (5 mL) of H₂PtCl₆·xH₂O (15 mg) and the mixture was stirred for 15 hours at room temperature. Subsequently, the water was evaporated off in an evaporator. The powder obtained was vacuum dried at room temperature for 2 hours in a vacuum line. Next, the powder was charged in a U-shaped glass tube and calcined by heating at 400°C for 2 hours under an oxygen gas flow (flow rate 20 mL/minute) (When activated carbon is used, the calcination is excluded). After cooling to room temperature, nitrogen gas was passed through to remove the oxygen, and under a hydrogen gas flow (flow rate 20 mL/minute), the mixture was reduced by heating for 2 hours at 400°C. After cooling to room temperature, nitrogen gas was passed through to remove the hydrogen, and the powder was recovered. The amount of metal supported in the catalyst was 60 mass% for Ni/SiO₂-Al₂O₃, but 2.5 mass% for other catalysts. For catalysts in which Ru was supported on HUSY (2.9), [Ru(NH₃)₆]Cl₃ was employed as starting material and the ionexchange (IE) method was employed to prepare Ru/HUSY (2.9, NH₃, IE). The impregnation - evaporation to dryness (IMP) method was employed using [Ru(NH₃)₆]Cl₃ to prepare Ru/HUSY (2.9, NH₃, IMP), and the impregnation - evaporation to dryness method was employed on RuCl₃·xH₂O to prepare Ru/HUSY (2.9, Cl, IMP). The catalytic activity of these compounds was compared. In addition, HUSY (20) support was impregnated with RuCl₃·xH₂O and the evaporation to dryness method was employed to prepare Ru/HUSY (20, Cl, IMP) as a catalyst for use.

The dispersion by carbon monoxide adsorption by the pulse method (CO/Pt, measured with a Chembet-3000 made by Quantachrome Instruments) is shown in Table 1.

**[Table 1]**

| Table 1 Dispersion of various catalysts by CO adsorption | |
|---|---|
| Catalyst | Dispersion (CO/Pt) |
| Pt/FSM-16 | 0.44 |
| Pt/SiO₂ | 0.08 |
| Pt/*gamma-*Al₂O₃ | 0.50 |
| Pt/HY | 0.41 |
| Pt/C | 0.03 |
| Pt/ZrO₂ | 0.08 |
| Pt/TiO₂ | 0.18 |
| Ru/FSM-16 | 0.005 |
| Ru/SiO₂ | 0.02 |
| Ru/HUSY(20, Cl, IMP) | 0.01 |
| Ru/HUSY(2.9, NH₃, IE) | 0.026 |
| Pd/FSM-16 | 0.08 |
| Ir/FSM-16 | 0.16 |
| Rh/FSM-16 | 0.39 |

### [Embodiment 1]

### Test method

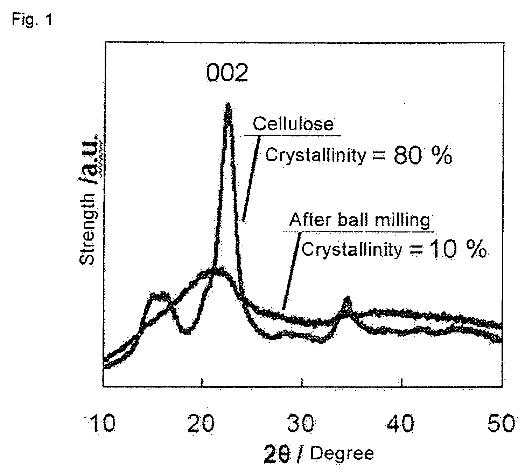

The micropowder Avicel from Merck was employed as cellulose. The cellulose was processed in a ball mill by charging 1 kg of zirconia beads 1 cm in diameter and 10 g of cellulose to a ceramic pot mill and turning the mixture 60 to 80 times per minute for four days (96 hours) on the rotating base of a benchtop pot mill. The degree of crystallinity of the starting material cellulose and the cellulose that had been processed for four days in the ball mill was measured by X-ray powder diffraction. The results are given in Fig. 1. The degree of crystallinity of the starting material cellulose was about 80 percent. By contrast, the degree of crystallinity of the cellulose that had been processed for four days in the ball mill was about 10 percent.

The catalyst was prepared by the usual impregnation method in the same manner as in the method described in Reference Example 1. Metal precursors in the form of ruthenium chloride (RuCl₃·3H₂O) and platinum chloride (H₂PtCl₆·6H₂O) were employed. They were supported (quantity of supported metal: 2.0 weight percent) on a *gamma*-alumina (Al₂O₃) support (Reference Catalyst JRC-ALO-2 of the Catalysis Society of Japan), zeolite HUSY (Si/Al ratio of 40, Zeolyst CBV780, referred to as HUSY(40) hereinafter), silica alumina (Sigma-Aldrich grade 135), HUSY(2.55) (Zeolyst CBV400), HUSY(2.6) (Zeolyst CVB600), HUSY(30) (Zeolyst CBV760), HUSY(100) (Catalysts and Chemicals Ind. Co., Ltd. ZCP-2000), H-beta (Reference Catalyst JRC-Z-B25(1) of the Catalysis Society of Japan), or ZSM-5 (Reference Catalyst JRC-Z5-90H(1) of the Catalysis Society of Japan). The Pt/Al₂O₃ employed was Catalysis Society of Japan Reference Catalyst JRC-PTAL-1 (supported quantity of Pt: 1.02 weight percent; BET surface area: 176 m²g⁻¹, Pt degree of dispersion 1.16).

The quantity of supported Ru/*gamma*-Al₂O₃ was confirmed by inductively coupled plasma (ICP) optical emission spectrometry to be 2.05 weight percent, which was consistent with the quantity supported during preparation.

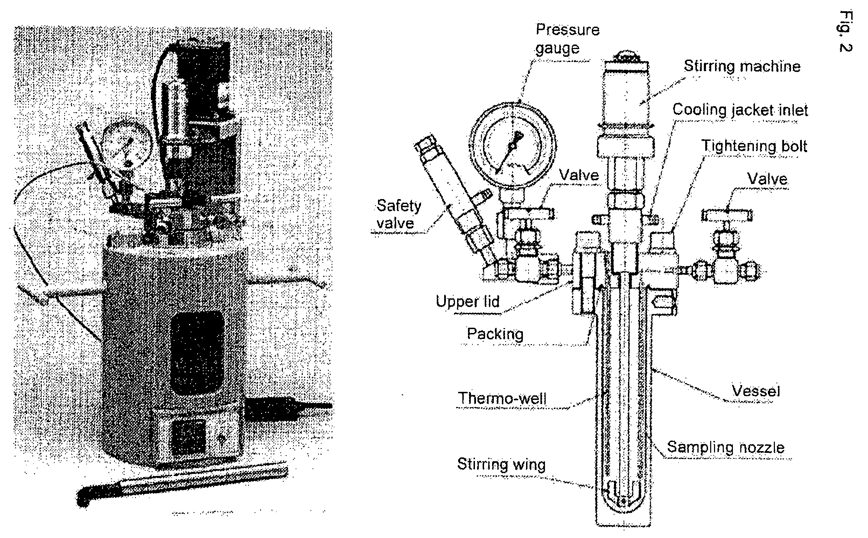

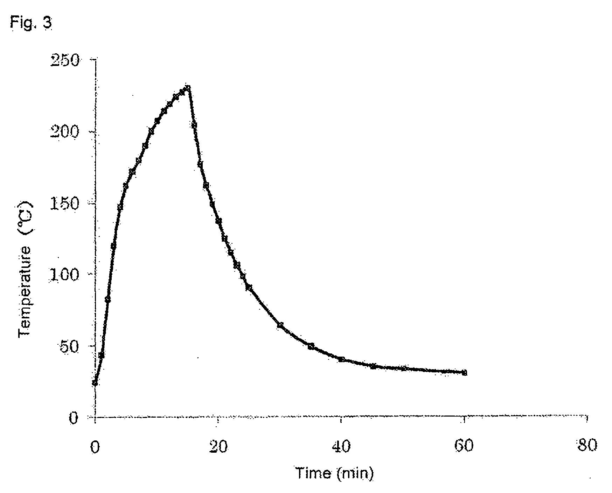

In the catalytic reaction, cellulose (320 mg, 2.0 mmols as units of C₆H₁₀O₅), a prescribed quantity of catalyst (number of metal atoms 20 microgram-atom, 50-100 mg in the form of Ru/*gamma*-Al₂O₃), and water (40 mL) were charged to an MMJ-100 high-pressure microreactor made by OM Lab-Tech Co., Ltd. (internal capacity 100 mL, Fig. 2) in air. The substrate/catalyst ratio (S/C) was adjusted to between 100 and 200 (0.5 to 1 mol percent) as the ratio of glucose units (C₆H₁₀O₅) to the total number of metal atoms. Subsequently, the mixture was stirred at 60 rpm and a programmed temperature regulator was employed with an electric furnace to heat the mixture from room temperature to 230°C in about 10 to 20 minutes. When 230°C had been reached, the electric furnace was immediately disengaged and a hair drier was used to blow cool air and returned the temperature to room temperature. Fig. 3 shows the typical change over time in the reaction temperature. Cooling was conducted at an average of about 20°C/minute from 230°C to 150°C and at an average of about 16°C/minute from 230°C to 110°C.

Following cooling, the solid and liquid were separated by centrifugal separation and filtration. The aqueous solution of the product, a liquid, was analyzed by high-performance liquid chromatography (HPLC, Shimadzu LC-10ATVP, column. Phenomenex Rezex RPM Monosaccharide PB++ (8%), mobile phase: water 0.6 mL/min, 80°C, differential refractometer detector). Additionally, HPLC was also conducted with the following HPLC packed columns to identify the products (Shodex SACCHARIDE SH1011, mobile phase: water 0.5 mL/min, 50°C, Tosoh TSK-GEL AMIDE-80, mobile phase acetonitrile:water (75:25) 0.7 mL/min, 25°C). The glucose was fractionated and isolated by HPLC, and then identified by ¹³C NMR and mass spectrometry. It was also identified by gas chromatography-mass spectrometry (GC-MS, measurement of the aqueous solution itself and the aqueous solution following treatment with trimethylsilyl). Following separation, the solid was dried for 24 hours at 110°C and mass was measured. The mass of the catalyst that had been charged was subtracted from this mass to obtain the mass of the unreacted cellulose.

The cellulose conversion rate was calculated from the following equation: Cellulose conversion rate = ((mass of cellulose charged - mass of unreacted cellulose)/mass of charged cellulose) x 100 (%).

The product yield (carbon-based yield) was calculated by dividing the total mass of the carbon in each product by the total mass of the carbon in the charged cellulose. For example, the glucose yield = (total mass of carbon in glucose produced)/(total mass of carbon in charged cellulose) x 100 (%).

The glucose selectivity was calculated by dividing the glucose yield by the cellulose conversion rate: Glucose selectivity = (glucose yield)/(cellulose conversion rate) x 100 (%).

### Test Result (1) The effects of supported catalysts on the cellulose degradation reaction

Table 2 indicates the effects of supported catalysts.

Supported Ru and Pt catalysts and the effects of support were examined in runs 5 to 9. In run 5, in which Ru/*gamma*-Al₂O₃ catalyst was employed, a cellulose conversion rate of 69 percent, a glucose yield of 27 percent, and a glucose selectivity of 39 percent were achieved. In run 6, in which Ru/HUSY(40) catalyst was employed, although a cellulose conversion rate of 51 percent was achieved, the glucose yield dropped to 11 percent.

When a catalyst obtained by mixing the catalysts of runs 5 and 6 was employed in run 7, a greatly increased cellulose conversion rate of 89 percent, glucose yield of 43 percent, and glucose selectivity of 48 percent were obtained. The glucose rate was higher than the sum (32 percent) of the glucose rates when Ru/*gamma*-Al₂O₃ and Ru/HUSY(40) were separately employed. A synergistic effect was thus found to have been achieved by mixing the catalysts. When *gamma*-Al₂O₃ + Ru/HUSY(40) were employed in run 9, the glucose yield was higher than in run 6, but did not surpass 16 percent. The use of a mixed catalyst of Ru/*gamma*-Al₂O₃ and Ru/HUSY(40) was highly effective for obtaining a high glucose yield.

Runs 10 to 14 show the results of reactions conducted with other catalytic systems. No promoting effect was found with the use of Ru/SiO₂-Al₂O₃, but the use of Pt/Al₂O₃ (Pt 1.02 weight percent) in run 13 exhibited activity as high as that of Ru/*gamma*-Al₂O₃. Accordingly, the use of a mixed catalyst of Pt/Al₂O₃ + Ru/HUSY(40) in run 14 yielded a cellulose conversion rate of greater than 99 percent and both a high yield and selectivity in the form of a glucose rate of 47 percent and a glucose selectivity of 47 percent.

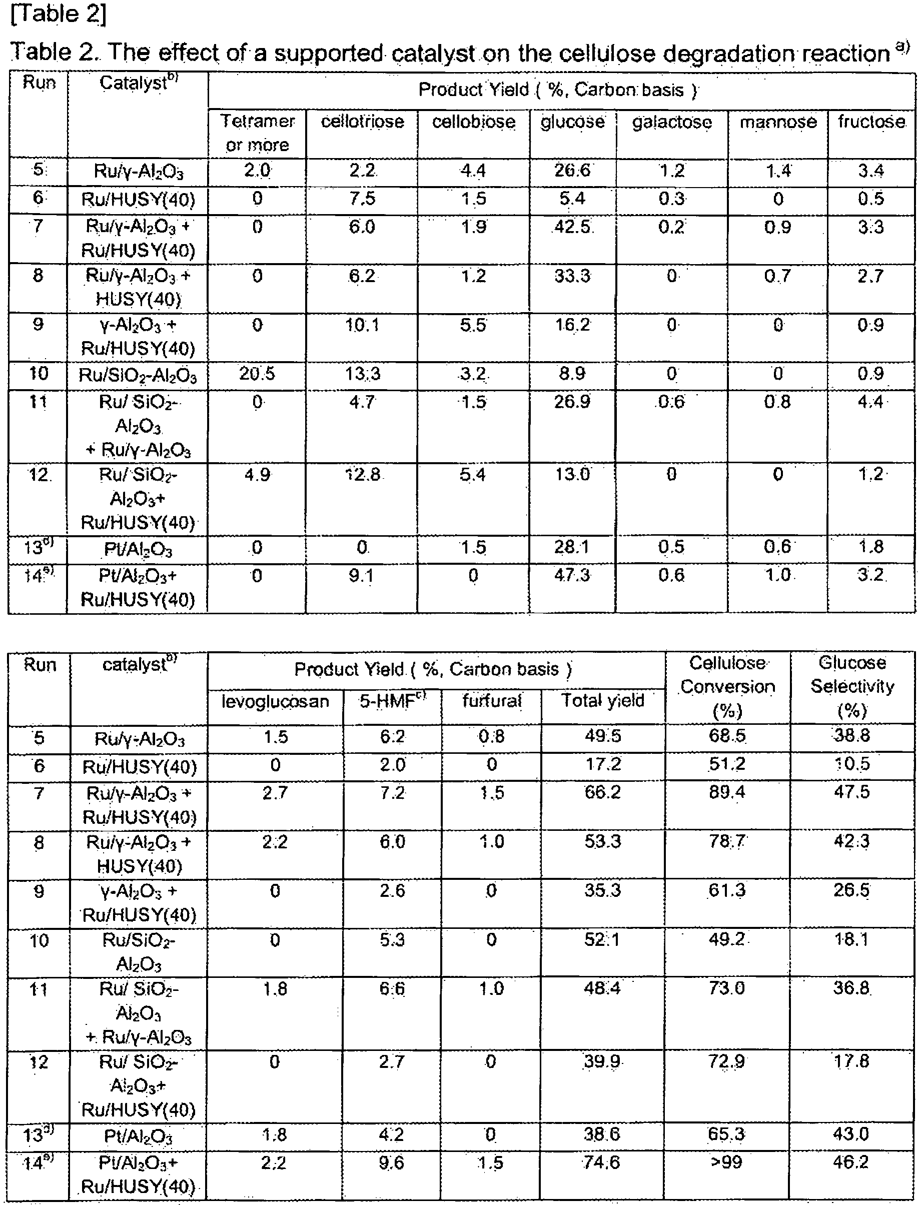

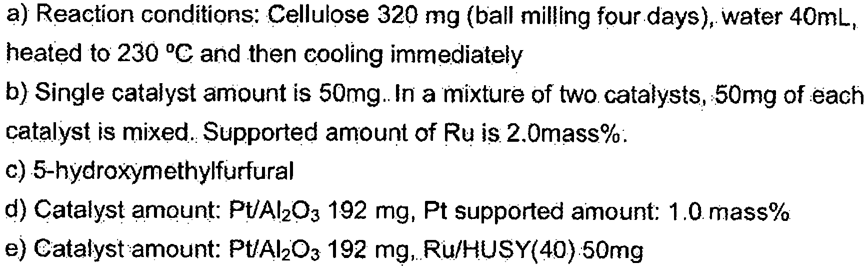

### Test Result (2) The effect of the quantity of a supported metal catalyst on the cellulose degradation reaction

Table 3 shows the results of an examination of the effect of the quantity of catalyst when a single catalyst in the form of Ru/*gamma*-Al₂O₃ or Ru/HUSY(40) was employed. When the quantity of catalyst in the form of Ru/*gamma*-Al₂O₃ was increased in runs 15 to 17, the glucose yield increased slightly. When use of 50 mg of catalyst in run 5 was adopted as a standard reference condition, the ratio of the number of moles (S) to the total number of metal atoms (C) in the glucose units in cellulose was S/C = 200 (0.5 mol percent). In runs 21 and 22, the quantity of Ru was kept constant and the mass% (mass percent) was varied. The glucose yield increased at a quantity of 2 weight percent).

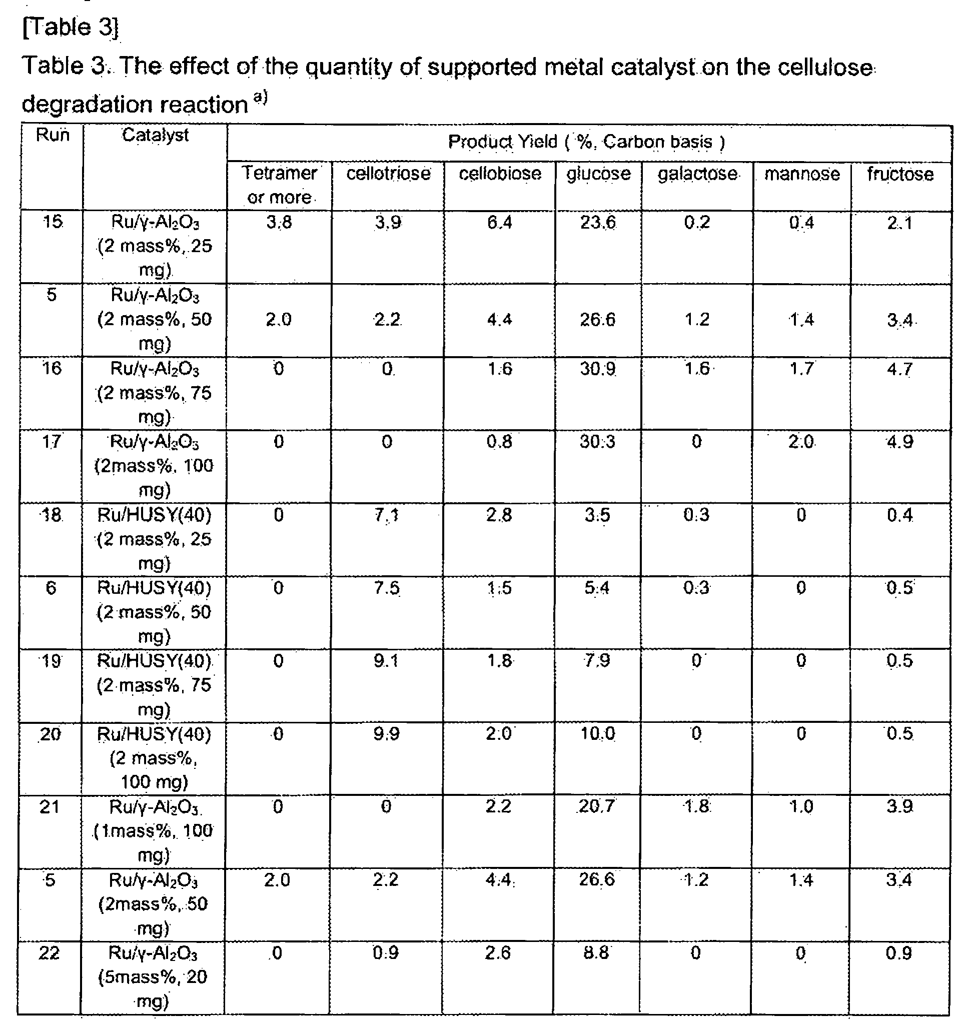

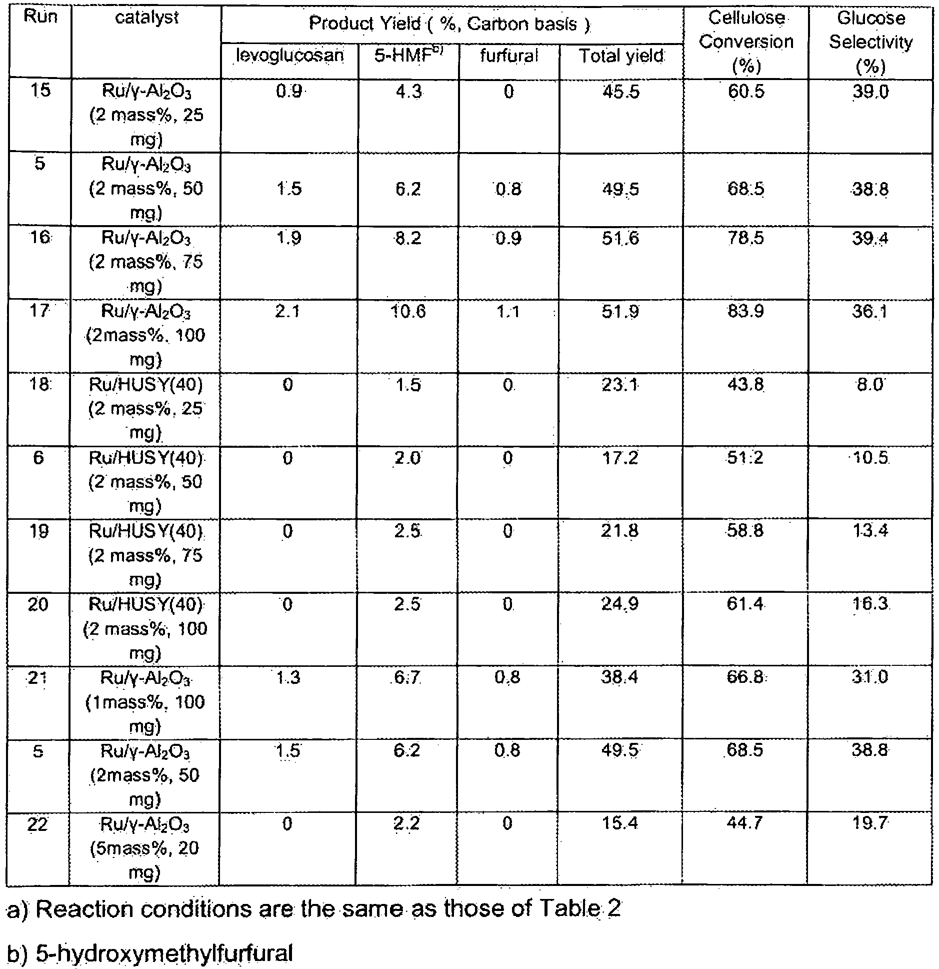

### Test Result (3) The effect of a gas atmosphere on the cellulose degradation reaction by Ru/gamma-Al₂O₃ + Ru/HUSY(40) catalyst

Table 4 shows the results of an examination of the effect of a gas atmosphere when employing Ru/*gamma*-Al₂O₃ + Ru/HUSY(40). There was no major change in the glucose yield and the reaction could be conducted in air at ordinary pressure. The results of a reaction conducted under hydrogen pressure conditions are given further below.

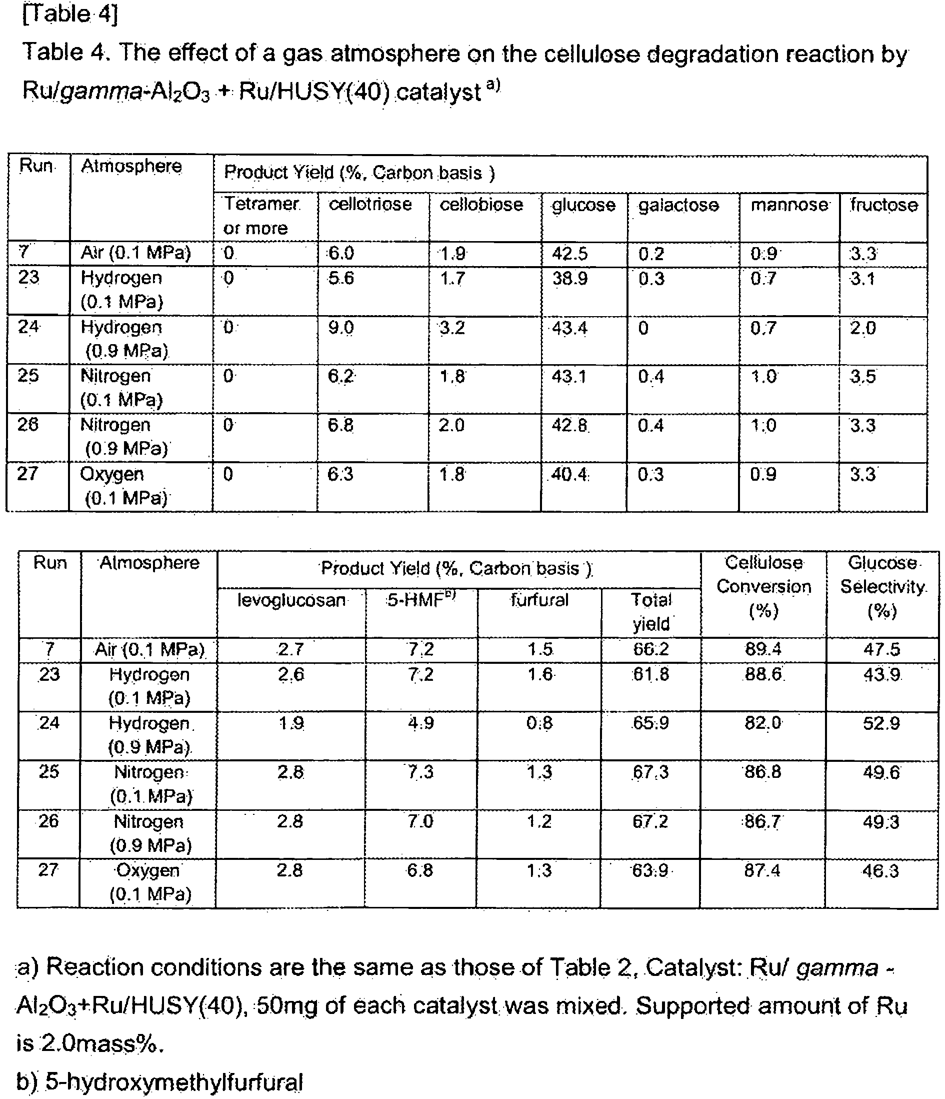

### Test Result (4) The effect of cellulose ball mill processing on the cellulose degradation reaction

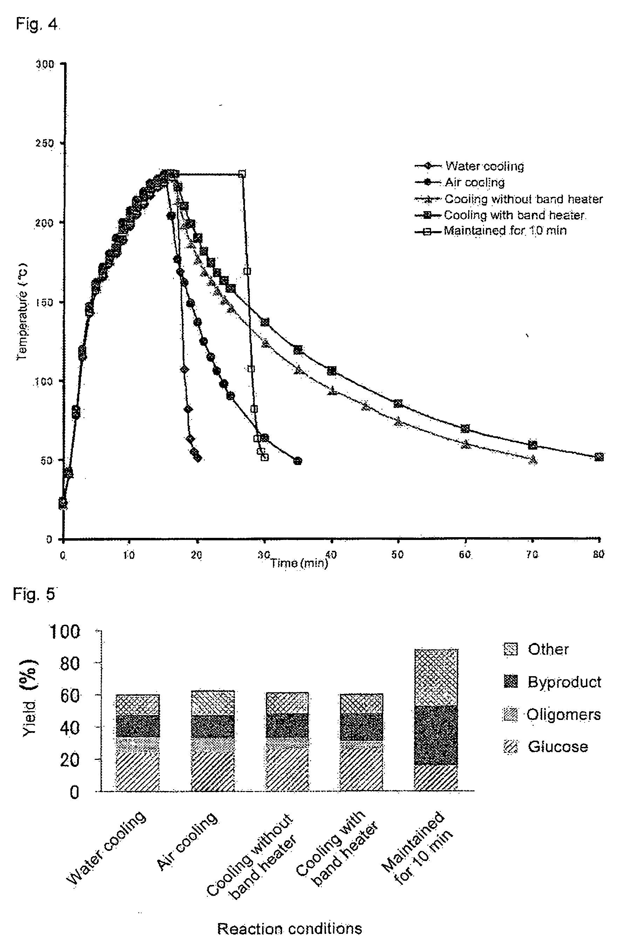

Fig. 5 shows the results of an examination of the effects of cellulose ball mill processing when using a Ru/*gamma*-Al₂O₃ + Ru/HUSY(40) catalyst. The cellulose conversion rate without ball mill processing was 35 percent and the glucose yield was a low 9 percent. However, the activity increased with four days of ball mill processing. The ball mill processing was thought to reduce the proportion of cellulose with a crystalline structure and increase the proportion having an amorphous structure.

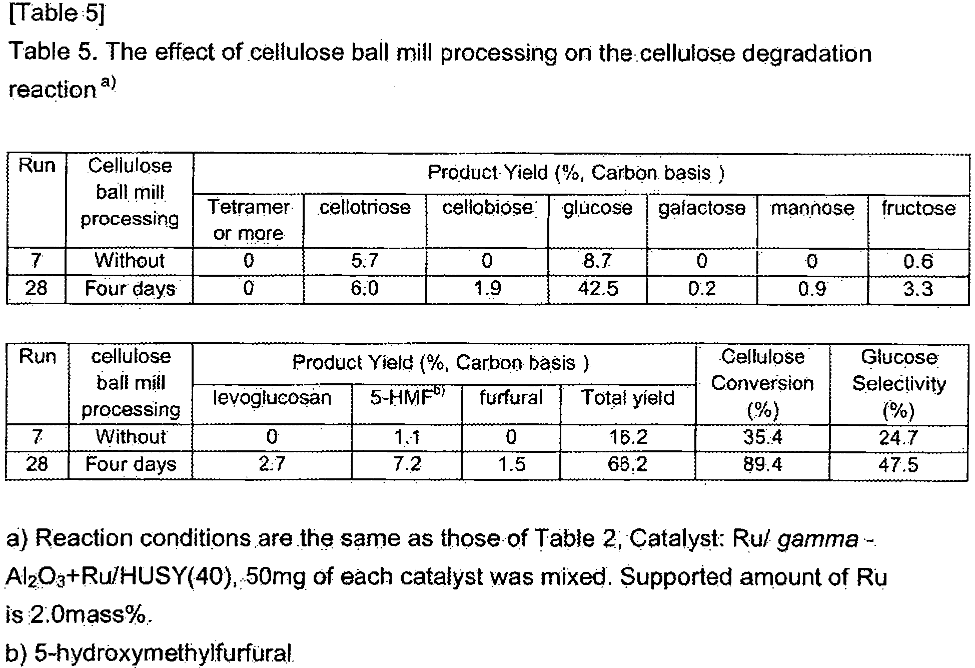

### Rest Result (5) The effect of a supported catalyst on the cellulose degradation reaction under hydrogen pressure

Table 6 shows the results of tests conducted at a hydrogen pressure of 0.9 MPa. The run numbers break from those of the results of Test Results (1) to (4); they have been reset. Double the quantity of the individual catalysts that was employed in air was employed in the reaction (please note when comparing). The cellulose conversion rate, glucose yield, and glucose selectivity that were obtained under hydrogen pressure were nearly identical to those obtained in air. High glucose yields (43 to 48 percent) were achieved with Ru/*gamma*-Al₂O₃ + Ru/HUSY(40) and Pt/Al₂O₃ + Ru/HUSY(40).

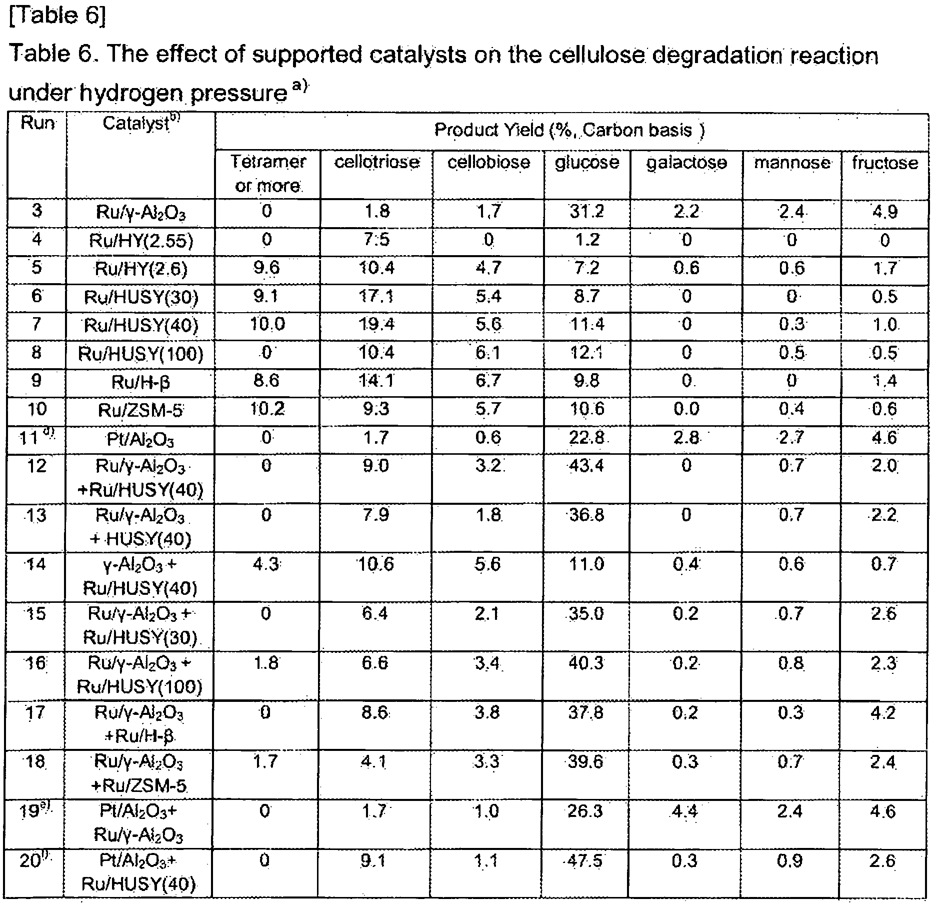

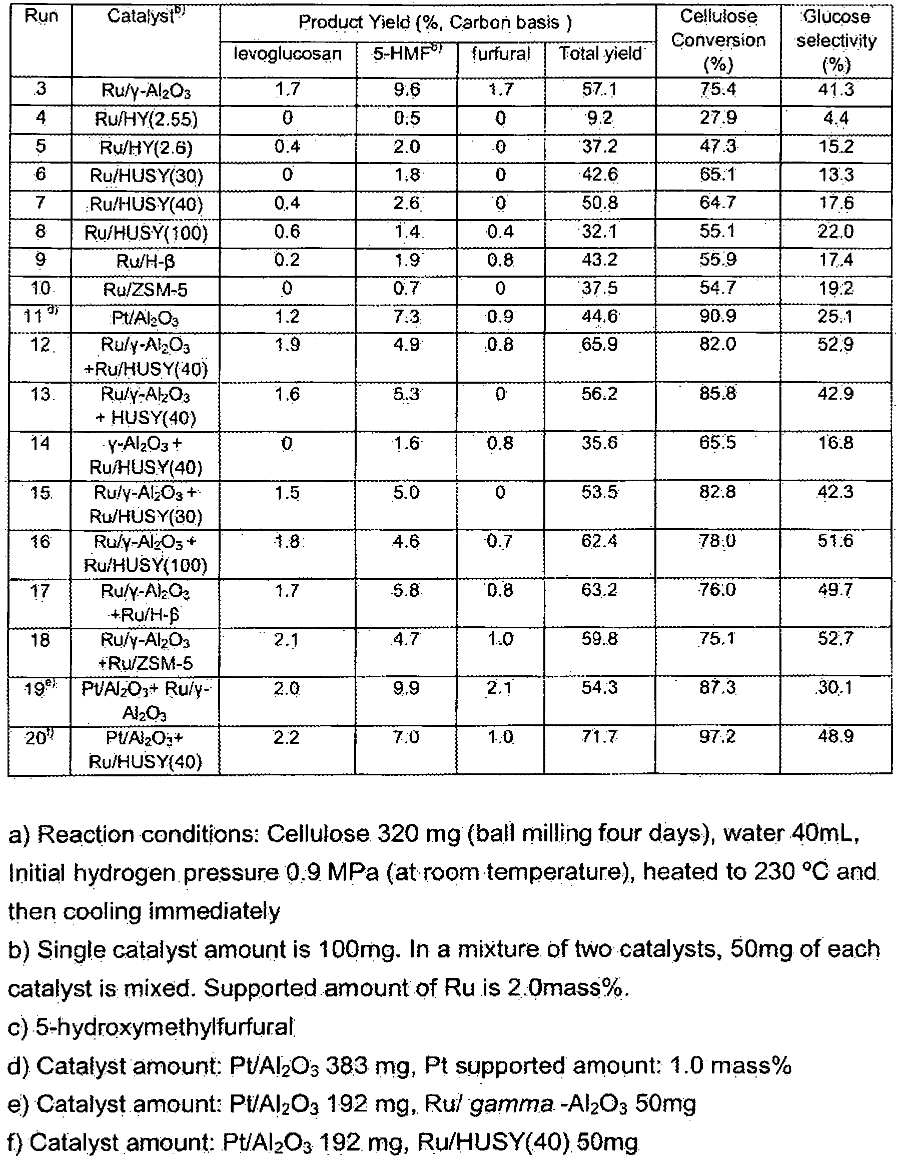

### Test Result (6) The effect of the quantity of catalyst on the cellulose degradation reaction under hydrogen pressure

Table 7 shows the results of the quantity of catalyst under hydrogen pressure. Ru/*gamma*-Al₂O₃ or Ru/HUSY(40) was employed alone as the catalyst. No significant change in the glucose yield was observed when the quantity of catalyst was increased from 50 mg to 100 mg.

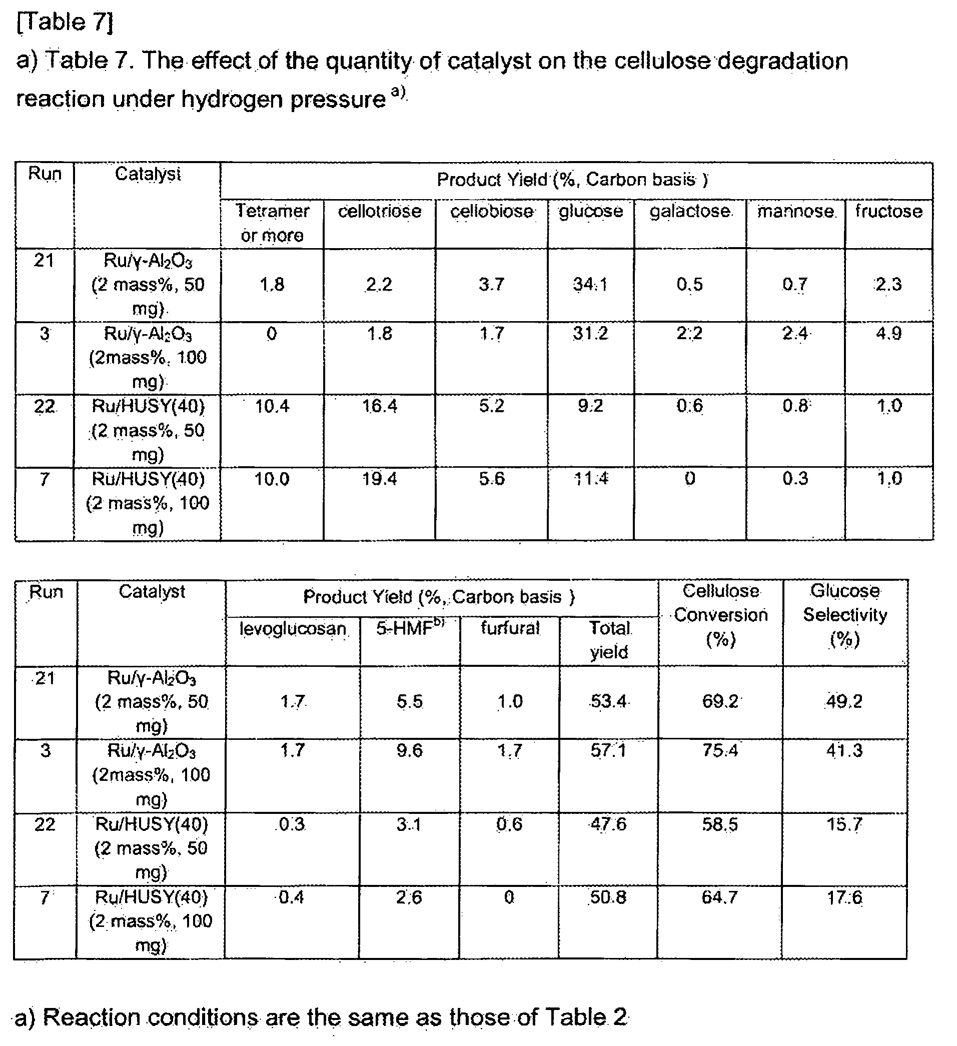

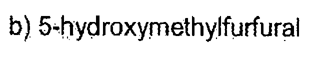

### Test Result (7) The effect of the catalyst blending ratio on the cellulose degradation reaction under hydrogen pressure

Table 8 shows the results of an examination of the effect of the catalyst blending ratio using Ru/*gamma*-Al₂O₃ and Ru/HUSY(40). Since the glucose yield and selectivity were high at ratios of 60:40 and 50:50, when a blended catalyst was employed, it was blended in equal proportions in the same manner as when 50:50 was employed. For the sake of convenience, the test was conducted at a blending ratio of 1:1 when the catalysts were mixed.

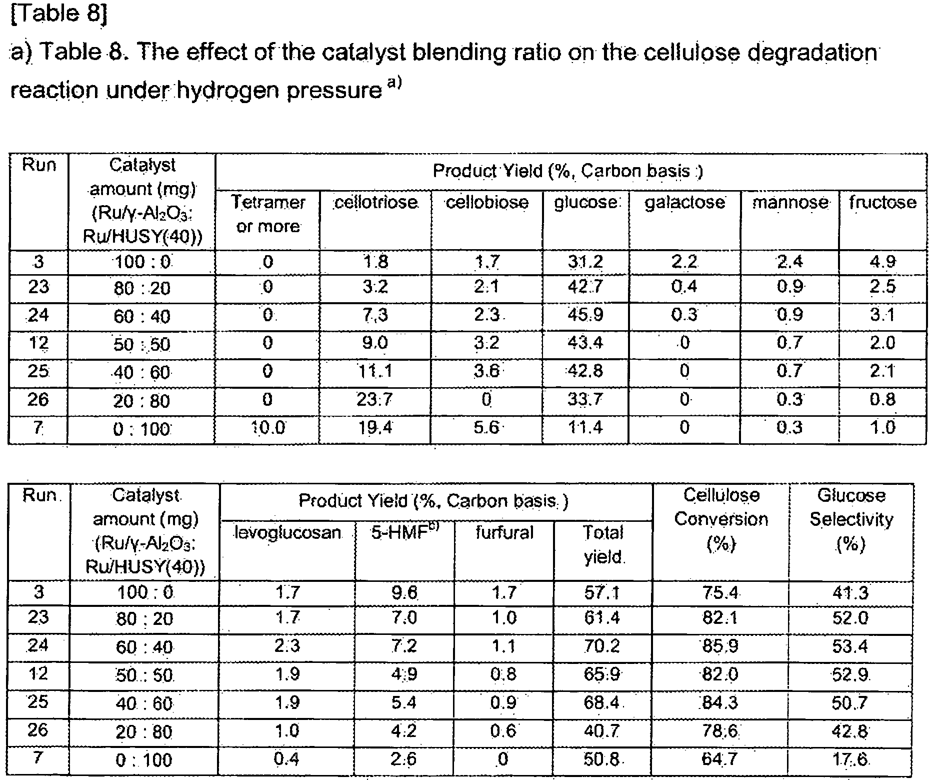

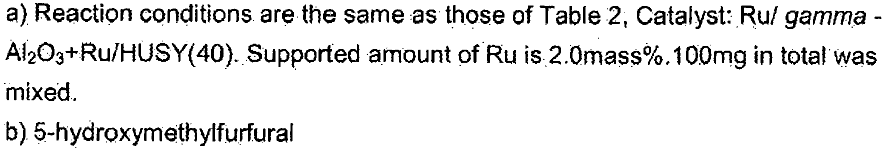

### Test Result (8) A test of the effects of heating/cooling conditions

A 50 mg quantity of 2 weight percent Ru/*gamma*-Al₂O₃ was employed as catalyst. The cellulose employed (320 mg) was a product that had been processed for four days in a ball mill. The catalytic reaction was conducted by heating an MMJ-100 microreactor to 230°C; cooling by (i) water cooling, (ii) air cooling, (iii) cooling without a band heater, (iv) cooling with a band heater, and (v) cooling after maintaining 230°C for 10 minutes. Fig. 4 shows the change in temperature (measurement of the temperature in the thermal well shown in Fig. 2) in the microreactor under various conditions. Tables 9 and 10 and Fig. 5 show the composition of the products obtained under various conditions. In Fig. 4, the tetramer and higher cellulose hydrolysis products, cellotriose, and cellobiose were classified as oligomers; 5-hydroxymethylfurfural(5-HMF), furfural, galactose, mannose, fructose, and levoglucosan were classified as byproducts; and compounds that could not be analyzed by HPLC among the converted cellulose (corresponding to the cellulose yield - total yield in Table 9) were classified as Other.

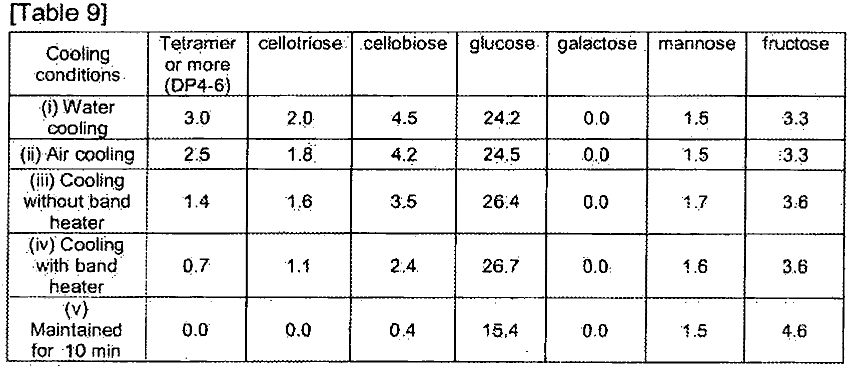

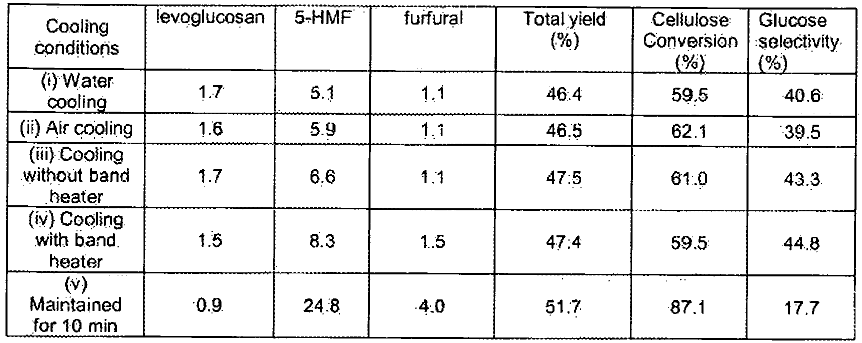

**[Table 10]**

| | Oligomers | Glucose | Byproducts | Other |
|---|---|---|---|---|
| (i) Water cooling | 9.5 | 24.2 | 12.8 | 13.1 |
| (ii) Air cooling | 8.5 | 24.5 | 13.5 | 15.7 |
| (iii) Cooling without band heater | 6.5 | 26.4 | 14.6 | 13.4 |
| (iv) Cooling with band heater | 4.2 | 26.7 | 16.5 | 12.1 |
| (v) Maintained for 10 minutes | 0.4 | 15.4 | 35.9 | 35.4 |

Based on the results shown in Tables 9 and 10 and Fig. 5, only when 230°C was maintained for 10 minutes did the ratio of byproduct in the form of 5-HMF greatly increase, indicating that the glucose produced by hydrolysis had degraded. It was anticipated that this degradation into 5-HMF would readily occur at 200°C and higher. Calculation of the period during which the temperature was 200°C or higher under the various conditions from the "autoclave temperature setting" revealed values of: (i) water cooling (7 minutes), (ii) air cooling (7 minutes), (iii) cooling without band heater (8 minutes), (iv) cooling with band heater (8 minutes), and (v) cooling after maintaining 230°C for 10 minutes (18 minutes). On this basis; from the perspective of inhibiting the degradation of glucose produced by hydrolysis into 5-HMF and increasing the glucose selectivity, the period within a temperature range of 200°C or higher was desirably kept to 15 minutes or less, preferably to 10 minutes or less.

### [Industrial Applicability]

The present invention is useful in the technical field of producing glucose from cellulose resources.

## Claims

1. A method of producing a saccharide-containing solution comprised chiefly of glucose, comprising:
heating cellulose to a temperature at which a pressurized state is achieved in the presence of water and a catalyst in which a transition metal from groups 8 to 11 is supported on a solid support to hydrolyze the cellulose and obtain glucose.

2. The production method according to claim 1, wherein the heating temperature falls within a range of 110 to 380°C.

3. The production method according to claim 1, wherein the hydrolysis atmosphere is air, oxygen, nitrogen, hydrogen, or a mixture thereof.

4. The production method according to claim 1, wherein the heating is stopped when the conversion rate of cellulose by hydrolysis is between 10 to 100 percent and the selectivity of glucose is between 30 to 80 percent.

5. The production method according to claim 4. wherein after stopping the heating, the reaction solution is cooled.

6. The production method according to claim 5, wherein cooling of the reaction solution is conducted under conditions that maintain a glucose selectivity of 30 to 80 percent.

7. The production method according to claim 5, wherein cooling of the reaction solution is conducted at a rate of 1 to 200°C/minute to a temperature of 200°C.

8. The production method according to any one of claims 1 to 7, wherein the heating or heating and cooling are conducted so that the reaction solution remains for fewer than 15 minutes at a temperature of 200°C or higher.

9. The production method according to any one of claims 1 to 8, wherein the transition metal is at least one member selected from the group consisting of platinum, ruthenium, rhodium, palladium, iridium, nickel, cobalt, iron, copper, silver, and gold.

10. The production method according to any one of claims 1 to 8, wherein the transition metal is at least one member selected from the group consisting of ruthenium, platinum, palladium, and rhodium.

11. The production method according to any one of claims 1 to 10, wherein at least a portion of the solid support is at least one member selected from the group consisting of alumina, silica-alumina, and zeolite.

12. The production method according to any one of claims 1 to 11, wherein the cellulose is crystalline, or is cellulose of reduced crystallinity.

13. The production method according to any one of claims 1 to 12, wherein following hydrolysis, the reaction mixture is subjected to solid-liquid separation to separate a saccharide-containing solution comprised chiefly of glucose and a solid comprised of at least a catalyst and unreacted cellulose.

## Patentansprüche

1. Verfahren zur Herstellung einer saccharidhaltigen Lösung, welche hauptsächlich Glucose umfasst, umfassend:
Erhitzen von Cellulose auf eine Temperatur, bei welcher ein unter Druck stehender Zustand erreicht wird in Gegenwart von Wasser und eines Katalysators, wobei ein Übergangsmetall aus den Gruppen 8 bis 11 getragen wird auf einem festen Träger, um die Cellulose zu hydrolysieren und Glucose zu erhalten.

2. Herstellungsverfahren nach Anspruch 1, wobei die Heiztemperatur innerhalb eines Bereichs von 110 bis 380 °C liegt.

3. Herstellungsverfahren nach Anspruch 1, wobei die Hydrolyse-Atmosphäre Luft, Sauerstoff, Stickstoff, Wasserstoff oder ein Gemisch davon ist.

4. Herstellungsverfahren nach Anspruch 1, wobei das Erhitzen beendet wird, wenn die Umsetzungsrate von Cellulose durch Hydrolyse zwischen 10 bis 100 % liegt und die Selektivität von Glucose zwischen 30 bis 80 % liegt.

5. Herstellungsverfahren nach Anspruch 4, wobei nach dem Beenden des Erhitzens die Reaktionslösung gekühlt wird.

6. Herstellungsverfahren nach Anspruch 5, wobei das Kühlen der Reaktionslösung durchgeführt wird unter Bedingungen, welche eine Glucose-Selektivität von 30 bis 80 % einhalten.

7. Herstellungsverfahren nach Anspruch 5, wobei das Kühlen der Reaktionslösung durchgeführt wird mit einer Geschwindigkeit von 1 bis 200 °C pro Minute auf eine Temperatur von 200 °C.

8. Herstellungsverfahren nach einem der Ansprüche 1 bis 7, wobei das Erhitzen oder das Erhitzen und Kühlen auf eine Weise durchgeführt werden, dass die Reaktionslösung für weniger als 15 Minuten bei einer Temperatur von 200 °C oder höher verbleibt.

9. Herstellungsverfahren nach einem der Ansprüche 1 bis 8, wobei das Übergangsmetall wenigstens ein ausgewähltes Mitglied der Gruppe ist, welche besteht aus Platin, Ruthenium, Rhodium, Palladium, Iridium, Nickel, Cobalt, Eisen, Kupfer, Silber und Gold.

10. Herstellungsverfahren nach einem der Ansprüche 1 bis 8, wobei das Übergangsmetall wenigstens ein ausgewähltes Mitglied der Gruppe ist, welche besteht aus Ruthenium, Platin, Palladium und Rhodium.

11. Herstellungsverfahren nach einem der Ansprüche 1 bis 10, wobei wenigstens ein Teil des festen Trägers wenigstens ein ausgewähltes Mitglied der Gruppe ist, welche besteht aus Aluminiumdioxid, Siliciumdioxid-Aluminiumdioxid sowie Zeolith.

12. Herstellungsverfahren nach einem der Ansprüche 1 bis 11, wobei die Cellulose kristallin ist oder Cellulose mit verringerter Kristallinität ist.

13. Herstellungsverfahren nach einem der Ansprüche 1 bis 12, wobei im Anschluss an die Hydrolyse das Reaktionsgemisch einer Fest-Flüssig-Trennung unterworfen wird, um eine saccharidhaltige Lösung aufzutrennen, welche hauptsächlich Glucose und einen Feststoff umfasst, welcher wenigstens einen Katalysator sowie nicht-umgesetzte Cellulose umfasst.

## Revendications

1. Procédé de production d'une solution contenant un saccharide principalement composée de glucose, comprenant :
le chauffage d'une cellulose à une température à laquelle un état pressurisé est atteint en présence d'eau et d'un catalyseur dans lequel un métal de transition appartenant aux groupes 8 à 11 est supporté sur un support solide pour hydrolyser la cellulose et obtenir du glucose.

2. Procédé de production selon la revendication 1, dans lequel la température de chauffage est située dans une plage allant de 110 °C à 380 °C.

3. Procédé de production selon la revendication 1, dans lequel l'atmosphère d'hydrolyse est l'air, l'oxygène, l'azote, l'hydrogène ou un mélange de ceux-ci.

4. Procédé de production selon la revendication 1, dans lequel le chauffage est arrêté quand le taux de conversion de la cellulose par hydrolyse est situé entre 10 et 100 pour cent et que la sélectivité du glucose est située entre 30 et 80 pour cent.

5. Procédé de production selon la revendication 4, dans lequel, après l'arrêt du chauffage, la solution réactionnelle est refroidie.

6. Procédé de production selon la revendication 5, dans lequel le refroidissement de la solution réactionnelle est réalisé dans des conditions qui maintiennent une sélectivité du glucose de 30 à 80 pour cent.

7. Procédé de production selon la revendication 5, dans lequel le refroidissement de la solution réactionnelle est réalisé à une vitesse de 1 à 200 °C/minute jusqu'à une température de 200 °C.

8. Procédé de production selon l'une quelconque des revendications 1 à 7, dans lequel le chauffage ou le chauffage et le refroidissement sont réalisés de façon que la solution réactionnelle reste pendant moins de 15 minutes à une température supérieure ou égale à 200 °C.

9. Procédé de production selon l'une quelconque des revendications 1 à 8, dans lequel le métal de transition est au moins un élément choisi dans le groupe constitué par le platine, le ruthénium, le rhodium, le palladium, l'iridium, le nickel, le cobalt, le fer, le cuivre, l'argent et l'or.

10. Procédé de production selon l'une quelconque des revendications 1 à 8, dans lequel le métal de transition est au moins un élément choisi dans le groupe constitué par le ruthénium, le platine, le palladium et le rhodium.

11. Procédé de production selon l'une quelconque des revendications 1 à 10, dans lequel au moins une partie du support solide est au moins un élément choisi dans le groupe constitué par l'alumine, la silice/alumine et une zéolithe.

12. Procédé de production selon l'une quelconque des revendications 1 à 11, dans lequel la cellulose est cristalline ou c'est une cellulose à cristallinité réduite.

13. Procédé de production selon l'une quelconque des revendications 1 à 12, dans lequel, après l'hydrolyse, le mélange réactionnel est soumis à une séparation solide/liquide pour séparer une solution contenant un saccharide principalement composée de glucose et un solide composé d'au moins un catalyseur et de la cellulose n'ayant pas réagi.
